# EUROPÄISCHE PATENTSCHRIFT

(11) **EP 2 738 071 B1**
(45) Veröffentlichungstag und Bekanntmachung des Hinweises auf die Patenterteilung: **12.08.2015**
(21) Anmeldenummer: 12008029.6
(22) Anmeldetag: 30.11.2012
(51) Int. Cl.: B60D 5/00

(54) **Gelenkfahrzeug mit einem Gelenk zwischen den Fahrzeugteilen**
Articulated vehicle with a joint between the vehicle sections
Véhicule articulé avec une articulation entre les parties du véhicule

(43) Veröffentlichungstag der Anmeldung: 04.06.2014
(73) Patentinhaber: Hübner GmbH & Co. KG, 34123 Kassel (DE)
(72) Erfinder: Ahrens, Ralf, 37235 Hessisch Lichtenau (DE); Dicke, Jan Hendrik, 34225 Baunatal (DE); Bittroff, Uwe, 34246 Vellmar (DE); Karasek, Jens, 34260 Kaufungen (DE)
(74) Vertreter: Walther, Walther & Hinz GbR

(56) Entgegenhaltungen:
- EP-A2- 0 446 614
- DE-A1- 19 706 683
- DE-C1- 3 912 383

## Beschreibung

Die Erfindung betrifft ein Gelenkfahrzeug mit einem Gelenk zwischen den Fahrzeugteilen, wobei das Gelenk zwei relativ zueinander verdrehbare Gelenksegmente umfasst, und wobei das Gelenk eine Dämpfungseinrichtung aufweist.

Gelenkfahrzeuge mit einem Fahrzeuggelenk mit Dämpfungseinrichtung zur Dämpfung der Fahrbewegungen der beiden durch das Fahrzeuggelenk verbundenen Fahrzeugteile sind insbesondere aus dem Straßenverkehr als sogenannte Gelenkbusse bekannt. Hierbei weist das Fahrzeuggelenk zwei durch ein Lager verbundene Gelenksegmente auf, die es einem solchen Gelenkfahrzeug ermöglichen einzuknicken, um eine Kurve zu durchfahren.

Über Metallgummilager ist das eine der Gelenksegmente mit dem einen Fahrzeugteil verbunden, um Nickbewegungen zuzulassen bzw. auch in geringem Umfange Wankbewegungen.

Ein solches Gelenk weist eine Dämpfungseinrichtung auf. Die Dämpfungseinrichtung selbst umfasst in der Regel zwei Kolbenzylinderdämpfer, die zu beiden Seiten der Mittellängsachse des Fahrzeugs bzw. auch des Fahrzeuggelenks am Fahrzeuggelenk angeordnet sind. Hierbei ist der Kolben an dem einen Gelenksegment und der Zylinder an dem anderen Gelenksegment jeweils drehbeweglich angeordnet. Insbesondere dann, wenn es sich bei dem Gelenkfahrzeug um einen sogenannten Pusher handelt, ist eine Steuerung vorgesehen, die in Abhängigkeit unter anderem vom Lenkwinkel, der Stellung der beiden Fahrzeugteile relativ zueinander und auch der Fahrgeschwindigkeit das Fahrzeuggelenk mehr oder weniger steif stellt. Dies deshalb, weil bei einem Pusherfahrzeug die hinterste Achse des Gelenkfahrzeugs angetrieben ist. Bei sogenannten Pullerbussen findet der Antrieb über die letzte Achse des vorderen Fahrzeugteiles statt, der hintere Teil wird ähnlich einem Anhänger lediglich hinterhergezogen. Bei solchen Pullerfahrzeugen sind derart aufwendige Steuerungen für Gelenke nicht erforderlich. Pusherfahrzeuge sind vieltausendfach im Einsatz; die eingesetzten Gelenke einschließlich der Steuerung für die Dämpfungseinrichtung des Gelenkes haben sich insofern bewährt.

Allerdings sind die Kolbenzylinderdämpfer relativ voluminös. Bedingt durch die Größe sind derartige Kolbenzylinderdämpfer, die zurzeit eingesetzt werden auch schwer. Bei der Konstruktion von Gelenkbussen ist man immer bestrebt, das Gewicht zu minimieren, um Kraftstoff zu sparen, aber auch um gegebenenfalls die Zuladung zu erhöhen, oder zumindest doch gleichzuhalten, wenn man berücksichtigt, dass das Gewicht moderner Busse durch Zusatzaggregate wie beispielsweise Rampen oder auch Klimaanlagen kontinuierlich erhöht wird.

Aus der EP 0 446 614 A2 ist eine Gelenkdämpfvorrichtung bekannt, bei der zwei Hydraulikzylinder mit ihrem einen Ende zu beiden Seiten zur Mittellängsachse des Fahrzeugs beabstandet am Vorder- oder Hinterwagen angeordnet sind. Mit ihrem anderen Ende sind die beiden Hydraulikzylinder am Drehkranz in einem gemeinsamen Drehpunkt angelenkt. Der Drehpunkt befindet sich bei einem Knickwinkel von 0° in der Mittellängsachse des Fahrzeugs.

Die DE 19706683 A1 beschreibt einen Schwingungsdämpfer bei dem das Dämpfmoment sowohl bei Ein- als auch bei Ausfahren des Kolbens im Wesentlichen immer gleich ist. Hierzu besitzt der Kolben ein Rückschlagventil, das einen Durchfluss des Hydraulikfluids von dem zylinderbodenseitigen Raum in den kolbenstangenseitigen Raum erlaubt.

Die der Erfindung zugrunde liegende Aufgabe besteht demzufolge darin, eine Dämpfungseinrichtung mit zwei Kolbenzylinderdämpfern bereitzustellen, deren Dämpfungseigenschaften bei vermindertem Bauvolumen und vermindertem Gewicht gleich den Kolbenzylinderdämpfern ist, so wie sie aus dem Stand der Technik bekannt sind.

Die Lösung der Aufgabe erfolgt durch die Merkmale des kennzeichnenden Teil des Anspruchs 1 in Verbindung mit den Merkmalen des Oberbegriffs. Die Dämpfungseinrichtung ist derart ausgebildet, dass das auf das Gelenk wirkende Dämpfmoment bei einer beliebigen Winkelstellung der Gelenksegmente zueinander sowohl in positiver als auch in negativer Drehrichtung bei Drehrichtungsumkehr im Wesentlichen gleich ist. Es wird darauf hingewiesen, dass die Kolbenzylinderdämpfer zwischen den beiden Gelenksegmenten an den Gelenksegmenten zu jeder Seite der Mittellängsachse des Gelenks angeordnet sind. Bei Verdrehung der beiden Gelenksegmente relativ zueinander, befindet sich ein Kolbenzylinderdämpfer auf der Außenseite und ein Kolbenzylinderdämpfer auf der Innenseite zwischen den beiden einknickenden Gelenksegmenten, wobei dieser z. B. rechte Kolbenzylinderdämpfer sich verkürzt, wohingegen der äußere z. B. linke Kolbenzylinderdämpfer sich längt. Es hat sich nun herausgestellt, dass der rechte Kolbenzylinderdämpfer also der Kolbenzylinderdämpfer der sich verkürzt, einen gänzlich anderen Dämpfmomentenverlauf initiiert, als der linke Kolbenzylinderdämpfer auf der Außenseite des Fahrzeuggelenkes. Dies insofern, als die initiierten Dämpfmomente sich in Abhängigkeit von der Winkelstellung der Segmente zueinander und entsprechend dem sich ändernden Hebelarm und der jeweils wirksamen Fläche am Kolben des jeweiligen Kolbenzylinderdämpfers ändern. Der Hebelarm ist der Abstand vom Punkt der Anlenkung des Kolbenzylinderdämpfers am Gelenksegment zum Mittelpunkt des Drehlagers, also der Drehachse. Dieser Abstand ist aufgrund der Bewegung des Punktes der Anlenkung auf einer Kreisbahn um die Drehachse variabel.

Durch die Lehre des kennzeichnenden Teils des Anspruches 1, wonach die Dämpfungseinrichtung derart ausgebildet ist, dass das auf das Gelenk wirkende Dämpfmoment bei einer beliebigen Winkelstellung der Gelenksegmente zueinander sowohl in positiver als auch in negativer Drehrichtung im Moment der Drehrichtungsumkehr gleich oder im Wesentlichen gleich ist, wird nun erreicht, dass beide Kolbenzylinderdämpfer bei Drehrichtungsumkehr in Summe das gleiche Drehmoment aufbringen. Dieses Verhalten hat im Übrigen auch einen überaus positiven Einfluss auf die Fahrdynamik; dies insofern als bei der Dämpfungseinrichtung nach dem Stand der Technik Sprünge im Dämpfmomentenverlauf entstehen, die zu ruckhaften Bewegungen der Fahrzeugteile führen, die nur durch eine aufwendige Regelung ausgeglichen werden können.

Im Einzelnen zeichnen sich die beiden Kolbenzylinderdämpfer einer Dämpfungseinrichtung, die über ein geringeres Bauvolumen und geringeres Gewicht als nach dem Stand der Technik verfügen dadurch aus, dass die beiden Kolbenzylinderdämpfer selbst Mittel zur Angleichung des jeweils aufzubringenden wirksamen Dämpfmomentes derart aufweisen, dass bei jeder Winkelstellung der beiden Gelenksegmente zueinander bei Drehrichtungswechsel das Dämpfmoment im Wesentlichen gleich ist. Das heißt, dass unabhängig von der Winkelstellung, das von beiden Kolbenzylinderdämpfern unter Berücksichtigung von Zylinderkraft und Hebel aufgebrachte Dämpfmoment in Summe immer im Wesentlichen gleich ist, aber über die Winkelstellung natürlich differiert. Das heißt, die Kolbenzylinderdämpfer der Dämpfungseinrichtung weisen selbst Mittel auf, Weiter auf Seite 5 der ursprünglichen Anmeldung durch die zumindest eine Angleichung und im Idealfall eine Übereinstimmung in den Dämpfungsmomentenverläufen erreicht wird. Um dem nach dem Stand der Technik ungünstigen Verhältnis zwischen Hebelarm und Zylinderkraft entgegen zu wirken, wird zur Angleichung des wirksamen Dämpfmomentes der beiden Kolbenzylinderdämpfer vorgeschlagen, mindestens ein Rückschlagventil mit Durchlassrichtung von der Zylinderseite auf die Kolbenstangenseite im Kolben vorzusehen. Das heißt, die Angleichung erfolgt auf rein mechanischem Wege. Die Überlegung, die hinter dieser Konstruktion steht, besteht darin, dass erkannt wurde, dass die wirksame Fläche auf der einen Seite des Kolbens unterschiedlich ist zu der auf der gegenüberliegenden Seite des Kolbens. Betrachtet man in diesem Zusammenhang zunächst einmal ein konventionelles Fahrzeuggelenk mit der Anordnung üblicher Kolbenzylinderdämpfer zu beiden Seiten der Mittellängsachse des Fahrzeuges, so gilt, dass wenn der rechte Kolbenzylinderdämpfer einfährt, der linke Kolbenzylinderdämpfer ausfährt. Bei dem rechten Kolbenzylinderdämpfer wirkt die Kolbenfläche, das heißt die Fläche, die dem Zylinderboden zugewandt ist, wohingegen bei dem linken Kolbenzylinderdämpfer die Ringfläche wirkt, das heißt die Kolbenfläche abzüglich des Querschnitts der Kolbenstange. Denkbar wäre nun in diesem Zusammenhang zur Lösung des Problems der unterschiedlichen Flächen dadurch Abhilfe zu schaffen, dass der Querschnitt der Kolbenstange minimiert wird. Es hat sich allerdings herausgestellt, dass die Kolbenstange nicht ohne Verlust an mechanischer Stabilität derart minimiert werden kann, dass dies signifikante Auswirkungen auf die Unterschiede des Dämpfmomentes zwischen den beiden einander gegenüberliegenden Kolbenzylinderdämpfern während der Knickbewegung hat. Durch die Anordnung des mindestens einen Rückschlagventiles kann allerdings ein diesbzgl. Ausgleich stattfinden und zwar dadurch, dass die Dämpfkraft an der Kolbenfläche reduziert wird, auf der Ringfläche aber gleich bleibt. Der freie Querschnitt des Rückschlagventiles ist hierbei abhängig vom Volumen der Kolbenstange im Zylinder und der maximalen Verfahrgeschwindigkeit des Kolbens in dem Zylinder. Das heißt, wird eine große Verfahrgeschwindigkeit des Kolbens in dem Zylinder angesetzt, dann muss das Rückschlagventil größer dimensioniert sein.

Es hat sich gezeigt, dass durch die Anordnung eines solchen Rückschlagventiles der Einfluss der Kolbenzylinderdämpfer auf den Dämpfmomentenverlauf beider Kolbenzylinderdämpfer spiegelbildlich (gespiegelt um die 0° Ebene) gleich werden kann, ohne die Kolbenstange minimieren zu müssen. Lediglich beim Drehwinkel 0°, das heißt bei gerader Stellung der beiden Gelenksegmente zueinander, ist die Kraft und damit der Einfluss auf das Dämpfmoment beider Kolbenzylinderdämpfer gleich. Somit ist der Dämpfmomentenverlauf von z. B. -40° bis 0° des einen Dämpfers gleich dem Dämpfmomentenverlauf des anderen Dämpfers im Bereich von z. B. +40° bis 0°. Das heißt, dass beispielsweise bei einem Winkel von + 40° das Dämpfmoment, das durch den linken äußeren Kolbenzylinderdämpfer bewirkt wird, nahezu zu 0 wird, wohingegen das Dämpfmoment, das durch den rechten Zylinder initiiert wird, annähernd einen Maximalwert aufweist, wobei im Gegenzug bei -40° das durch den linken Kolbenzylinderdämpfer initiierte Moment ebenfalls annähernd den Maximalwert zeigt und der rechte Kolbenzylinderdämpfer nahezu wirkungslos ist.

Da bedingt durch das mindestens eine Rückschlagventil im Boden des Kolbens der zu bewegende Volumenstrom vermindert ist, kann auch das Volumen des Speicherraums für das Hydraulikfluid minimiert werden, da über den Steuerblock der Hydraulik nur das Differenzvolumen bewegt werden muss. Das Differenzvolumen ist das Volumen, das durch die Hydrauliksteuerung fließt abzüglich des Volumens, das durch das Rückschlagventil im Kolben fließt. Hieraus folgt, dass die Kolbenzylinderdämpfer nach der Erfindung ein geringeres Bauvolumen und entsprechend ein geringeres Gewicht aufweisen, als dies beim Stand der Technik der Fall ist.

Anhand der Zeichnungen wird die Erfindung nachstehend beispielhaft näher erläutert.
- Die Figuren 1 bis 4: zeigen ein Drehgelenk eines Fahrzeugs mit zwei Gelenksegmenten in verschiedenen Winkelstellungen der beiden Gelenksegmente zueinander;
- Fig. 5: zeigt schematisch die Kolbenfläche des Kolbens eines Kolbenzylinderdämpfers;
- Fig. 6: zeigt die Ringfläche des Kolbens eines Kolbenzylinderdämpfers;
- Fig. 7: zeigt die wirksame Fläche des Kolbens eines Kolbenzylinderdämpfers mit im Kolben angeordneten Rückschlagventil;
- Fig. 8: zeigt schematisch den Dämpfmomentenverlauf bei konventioneller Gestaltung der Kolbenzylinderdämpfer;
- Fig. 9: zeigt schematisch den Dämpfmomentenverlauf der Kolbenzylinderdämpfer mit im Kolben angeordneten Rückschlagventil;
- Fig. 10: zeigt die Hydrauliksteuerung beider Kolbenzylinderdämpfer mit Notdämpfung eines Kolbenzylinderdämpfers.

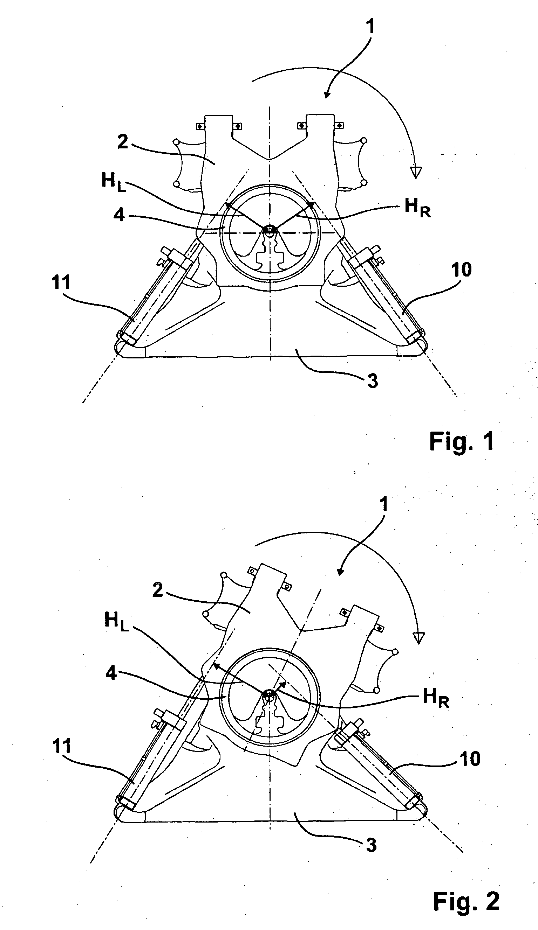

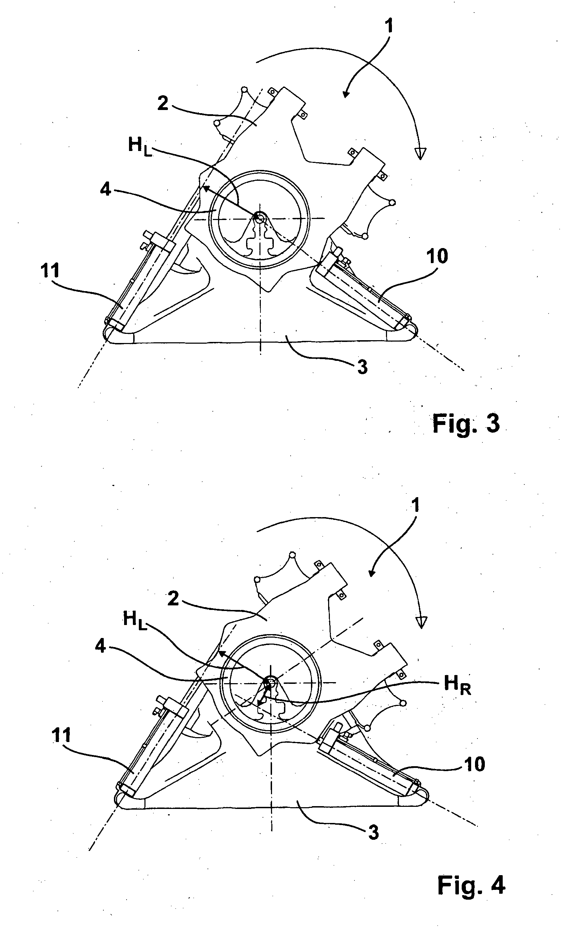

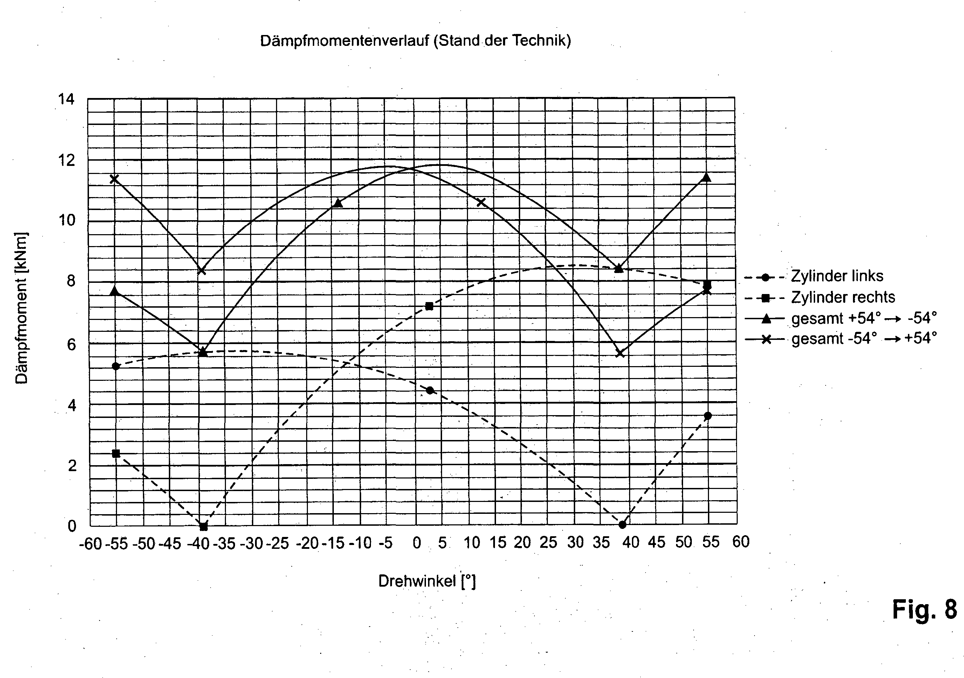

Gemäß den Figuren 1 bis 4 ist das Gelenk mit 1 bezeichnet und besitzt die beiden Gelenksegmente 2 und 3. Die beiden Gelenksegmente 2 und 3 sind durch das Drehlager 4 miteinander verbunden, wobei das Drehlager 4 zentrisch die gedachte Drehachse des Gelenkes 1 bildet. Zu beiden Seiten der beiden Gelenksegmente 2, 3 befinden sich die Kolbenzylinderdämpfer 10, 11, wobei der Kolbenzylinderdämpfer 10 auf der rechten Seite des Gelenkes angeordnet ist, und der Kolbenzylinderdämpfer 11 auf der linken Seite des Gelenkes, und wobei ein jeder Kolbenzylinderdämpfer mit den beiden Gelenksegmenten verdrehbar in Verbindung steht. Die beiden Kolbenzylinderdämpfer 10, 11 bilden die Dämpfungseinrichtung 13. Geht man für die folgenden Betrachtungen davon aus, dass der linke und der rechte Kolbenzylinderdämpfer konventionelle Kolbenzylinderdämpfer sind, also solche Kolbenzylinderdämpfer, die über kein Rückschlagventil im Kolben verfügen, dessen Durchlassrichtung in Richtung Ringfläche des Kolbens ausgerichtet ist, so ergibt sich ein Dämpfmomentenverlauf in Bezug auf die beiden Kolbenzylinderdämpfer, wie er in Fig. 8 dargestellt ist. Erkennbar wird durch den rechten Zylinder ein gänzlich anderer Dämpfmomentenverlauf bewirkt, als durch den linken Zylinder. Hierbei ist erkennbar, dass der Verlauf der Kurve, der die Aufsummation der Dämpfmomente von + 54° zu -54° abbildet, ein gänzlich anderer ist, als der von -54° zu +54°. Dies rührt im Wesentlichen daher, dass, wie bereits ausgeführt, die aus den Dämpfungskräften in Verbindung mit den entsprechenden Hebelarmen HL, HR resultierenden Dämpfmomentenverläufe der beiden Kolbenzylinderdämpfer unterschiedlich sind.

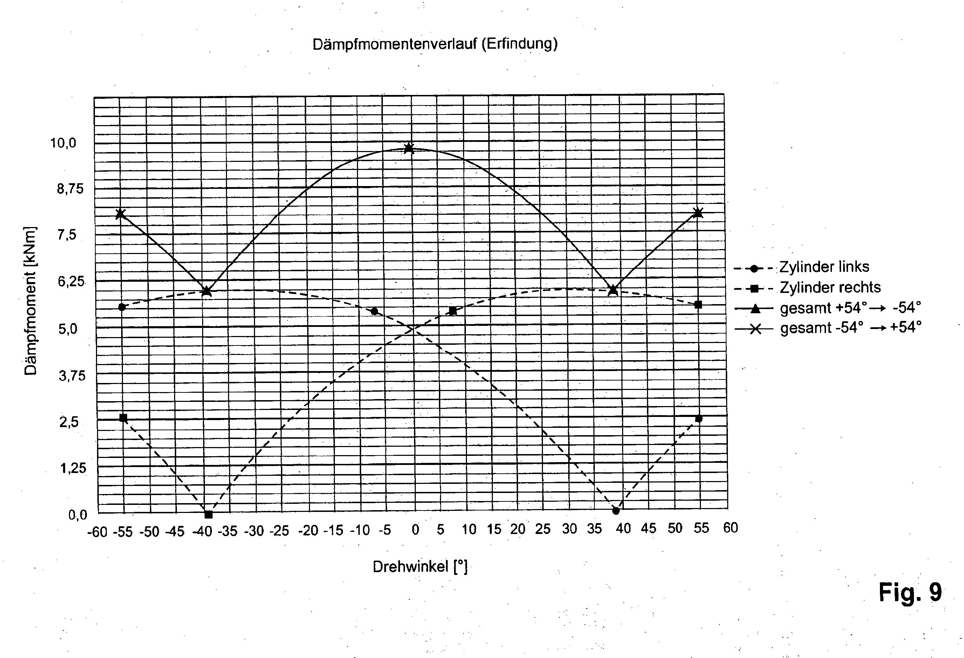

Betrachtet man im Gegensatz dazu die Fig. 9, bei der die Kolbenzylinderdämpfer mit Kolben ausgerüstet sind, die ein Rückschlagventil mit Durchflussrichtung in Richtung auf den Ringraum bzw. auf die Ringfläche des Kolbens zu aufweisen, erkennt man, dass die Dämpfmomentenverläufe resultierend sowohl aus dem rechten Zylinder als auch dem linken Zylinder spiegelbildlich gleich sind. Bildet man die Summe der Werte der einzelnen Dämpfmomente, so erkennt man, dass die hierbei entstehenden Kurven sowohl von -54° nach +54° als auch von +54° nach - 54° identisch, also deckungsgleich sind. Das bedeutet, dass bei jeder Winkelstellung bei Drehrichtungsumkehr das zur Verfügung stehende Dämpfmoment sowohl in positiver als auch in negativer Drehrichtung des Gelenks immer das gleiche ist. Es gibt hier keine Momentensprünge, die schlussendlich einen negativen Einfluss auf die Fahrdynamik haben, wie dies bereits an anderer Stelle erörtert wurde.

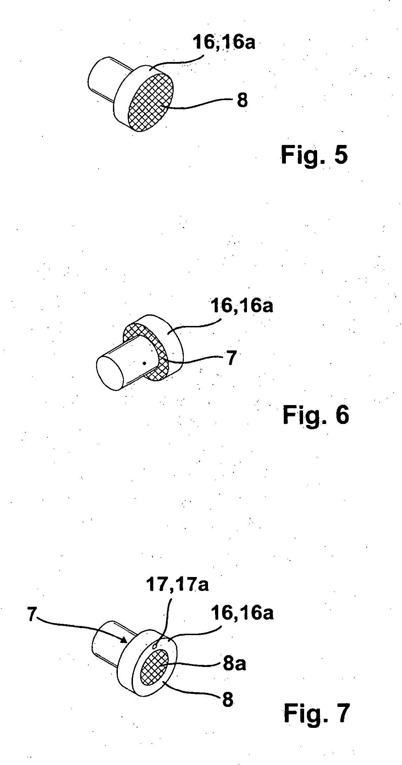

Erklärbar ist dies wie folgt: die wirksame Fläche 7 des Kolbens auf der Kolbenstangenseite (Ringfläche) ist um die Querschnittsfläche der Kolbenstange kleiner als die wirksame Fläche 8 des Kolbens in Richtung auf den Zylinderboden (Kolbenfläche). Durch das Rückschlagventil 17, 17a wird in jedem Kolbenzylinderdämpfer die Wirkung der unterschiedlichen Flächen 7, 8 bei gleichem Druck derart zueinander angeglichen, dass die aus Druck und Fläche resultierenden Kräfte gleich sind oder zumindest angeglichen werden. Das heißt, die wirksame Kolbenfläche in Fig. 7 ist etwa auf die Fläche 8a reduziert.

Für die Dimensionierung des Rückschlagventils 17, 17a ist allerdings auch die Verfahrgeschwindigkeit des Kolbens im Zylinder maßgeblich, das heißt das pro Zeiteinheit zu verdrängende Volumen. Bei größerer Verfahrgeschwindigkeit wird das Rückschlagventil in Bezug auf die freie Querschnittsfläche größer zu dimensionieren sein.

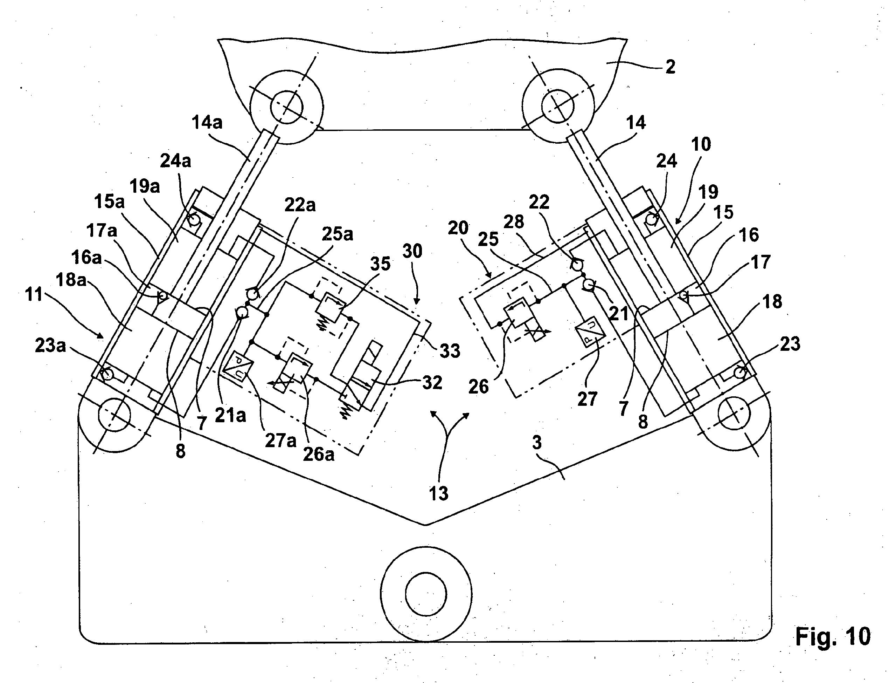

Die beiden Kolbenzylinderdämpfer, wie sie in den Figuren 1 bis 4 dargestellt sind und mit 10 und 11 bezeichnet sind, zeigen jeweils eine eigene Hydrauliksteuerung 20, 30 auf (Fig. 10). Die beiden dargestellten Steuerungen 20, 30 unterscheiden sich insofern, als die Hydrauliksteuerung 30 eine Notdämpfung ermöglicht. Betrachtet man zunächst die Hydrauliksteuerung 20 mit dem Kolbenzylinderdämpfer 10, so zeigt der Zylinder einen Speicherraum 15 als Speicher für die Hydraulikflüssigkeit. Der Speicherraum wird durch einen ringförmigen Raum um den Zylinder gebildet; dass heißt, der Zylinder ist doppelwandig. Das Volumen des Speicherraums oder Ringspeichers ist abhängig von dem über die Hydrauliksteuerung zu bewegenden Volumen des Fluids. Der Kolben selbst ist mit 16 bezeichnet, wobei sich in dem Kolben das mit 17 bezeichnete Rückschlagventil befindet. Die Kolbenstange trägt das Bezugszeichen 14. Der Kolbenraum, also der Raum, der dem Zylinderboden zugerichtet ist, trägt das Bezugszeichen 18, der Ringraum das Bezugszeichen 19.

In gleicher Weise ist auch der im Bild linke Kolbenzylinderdämpfer 11 ausgebildet, weshalb dort die Bezugszeichen mit dem Buchstaben a ergänzt worden sind.

Sowohl der Kolbenraum 18, 18a als auch der Ringraum 19, 19a stehen jeweils durch ein Rückschlagventil 23, 23a und 24, 24a mit dem Speicherraum 15, 15a in Verbindung. Darüber hinaus sind zwei gegenläufig angeordnete Rückschlagventile 21, 21 a und 22, 22a vorgesehen, die ebenfalls den Kolbenraum und den Ringraum durch die Leitung 25, 25a mit der Hydrauliksteuerung 20, 30 verbinden.

Betrachtet man zunächst die Hydrauliksteuerung 20, so erkennt man dort das mit 26 bezeichnete Proportionaldruckbegrenzungsventil. Dieses Proportionaldruckbegrenzungsventil 26 wird durch ein Steuergerät (nicht dargestellt) angesteuert. Zur Überwachung ist der mit 27 bezeichnete Drucksensor vorgesehen. Ausgangsseitig ist das Proportionaldruckbegrenzungsventil 26 wiederum durch die Leitung 28 mit dem Speicherraum 15 verbunden.

Ein solches Proportionaldruckbegrenzungsventil zeigt auch die Hydrauliksteuerung 30, das dort mit dem Bezugszeichen 26a versehen ist. Parallel geschaltet zu diesem Proportionaldruckbegrenzungsventil 26a ist das Ventil 35, das als Druckbegrenzungsventil ausgebildet ist, und das ebenso, wie das Proportionaldruckbegrenzungsventil mit 26a mit dem 3/2 Wegeventil 32 in Verbindung steht. Ausgangsseitig ist dieses 3/2 Wegeventil 32 durch die Leitung 33 wiederum an den Speicherraum 15a angeschlossen.

Für die Funktionsweise wird zunächst auf die Hydrauliksteuerung 20 verwiesen. Hier ist, wie bereits ausgeführt, dass Proportionaldruckbegrenzungsventil 26 vorgesehen, und insofern das Dämpfmoment über das Proportionaldruckbegrenzungsventil einstellbar ist. Die Erzeugung der Dämpfkraft erfolgt in jeder Bewegungsrichtung des Kolbens.

Die Hydrauliksteuerung 30 zeigt, wie an anderer Stelle bereits dargelegt, zusätzlich zu dem Proportionaldruckbegrenzungsventil 26a eine sogenannte Notdämpfung. Fällt das Proportionaldruckbegrenzungsventil 26a aus, beispielsweise dadurch, dass der Strom ausfällt, dann wird durch das mechanische 3/2 Wegeventil 32 der Durchfluss zum Proportionaldruckbegrenzungsventil 26a unterbrochen. Dies kann auch durch das Steuergerät aktiv ausgelöst werden. Das heißt, das 3/2 Wegeventil verschließt unter der Last einer Feder mechanisch den Weg zum Proportionaldruckbegrenzungsventil 26a und öffnet den Pfad zum Druckbegrenzungsventil 35. Das bedeutet, dass bei Stromausfall die Hydrauliksteuerung automatisch in den Modus "Notdämpfung" übergeht.

### Bezugszeichenliste:

- 1: Gelenk
- 2: Gelenksegment
- 3: Gelenksegment
- 4: Drehlager
- 7: Fläche des Kolbens auf der Kolbenstangenseite (Ringfläche)
- 8: Fläche des Kolbens auf der Zylinderbodenseite (Kolbenfläche)
- 10: Kolbenzylinderdämpfer
- 11: Kolbenzylinderdämpfer
- 13: Dämpfungseinrichtung
- 14: Kolbenstange
- 14a: Kolbenstange
- 15: Speicherraum für Hydraulikfluid
- 15a: Speicherraum für Hydraulikfluid
- 16: Kolben
- 16a: Kolben
- 17: Rückschlagventil
- 17a: Rückschlagventil
- 18: Kolbenraum
- 18a: Kolbenraum
- 19: Ringraum
- 19a: Ringraum
- 20: Hydrauliksteuerung
- 21: Rückschlagventil
- 21a: Rückschlagventil
- 22: Rückschlagventil
- 22a: Rückschlagventil
- 23: Rückschlagventil
- 23a: Rückschlagventil
- 24: Rückschlagventil
- 24a: Rückschlagventil
- 25: Leitung
- 25a: Leitung
- 26: Proportionaldruckbegrenzungsventil
- 26a: Proportionaldruckbegrenzungsventil
- 27: Drucksensor
- 28: Leitung
- 30: Hydrauliksteuerung
- 32: 3/ 2 Wegeventil
- 33: Leitung
- 35: Druckbegrenzungsventil

## Patentansprüche

1. Gelenkfahrzeug mit einem Gelenk (1) zwischen den Fahrzeugteilen, wobei das Gelenk (1) zwei relativ zueinander verdrehbare Gelenksegmente (2, 3) umfasst, wobei das Gelenk (1) eine Dämpfungseinrichtung (13) aufweist,
**dadurch gekennzeichnet,**
**dass** die Dämpfungseinrichtüng (13) derart ausgebildet ist, dass das auf das Gelenk (1) wirkende Dämpfmoment bei einer beliebigen Winkelstellung der Gelenksegmente (2, 3) zueinander, sowohl in positiver als auch in negativer Drehrichtung bei Drehrichtungsumkehr im Wesentlichen gleich ist, wobei die Dämpfungseinrichtung (13) zwei Kolbenzylinderdämpfer (10, 11) aufweist, wobei jeweils einer der Kolbenzylinderdämpfer (10, 11) zu jeder Seite der Mittellängsachse des Gelenks (1) zwischen den beiden Gelenksegmenten (2, 3) an den Gelenksegmenten (2, 3) angeordnet ist.

2. Gelenkfahrzeug mit einem Gelenk (1) zwischen den Fahrzeugteilen nach Anspruch 1,
**dadurch gekennzeichnet,**
**dass** die beiden Kolbenzylinderdämpfer (10, 11) jeweils Mittel zur Angleichung der wirksamen Dämpfkraft derart aufweisen, dass bei jeder Winkelstellung der beiden Gelenksegmente (2, 3) zueinander das durch die beiden Kolbenzylinderdämpfer (10, 11) bewirkte Dämpfmoment bei Drehrichtungsumkehr im Wesentlichen gleich ist.

3. Gelenkfahrzeug mit einem Gelenk (1) zwischen den Fahrzeugteilen nach Anspruch 2,
**dadurch gekennzeichnet,**
**dass** zur Angleichung des wirksamen Dämpfmomentes, der Kolben eines jeden Kolbenzylinderdämpfers (10, 11) mindestens ein Rückschlagventil (17, 17a) mit Durchlassrichtung von der Zylinderbodenseite zur Kolbenstangenseite aufweist.

4. Gelenkfahrzeug mit einem Gelenk (1) zwischen den Fahrzeugteilen nach Anspruch 3,
**dadurch gekennzeichnet,**
**dass** der freie Querschnitt des Rückschlagventiles (17, 17a) in Abhängigkeit des Volumens der Kolbenstange (14, 14a) in dem Zylinder und der maximalen Verfahrgeschwindigkeit des Kolbens (16, 16a) in dem Zylinder des Kolbenzylinderdämpfers (10, 11) steht.

5. Gelenkfahrzeug mit einem Gelenk (1) zwischen den Fahrzeugteilen nach einem der voranstehenden Ansprüche,
**dadurch gekennzeichnet,**
**dass** der Kolbenzylinderdämpfer (10, 11) als Hydraulikdämpfer auf seinem Umfang einen Speicherraum (15, 15a) für die Hydraulikflüssigkeit aufweist.

6. Gelenkfahrzeug mit einem Gelenk (1) zwischen den Fahrzeugteilen nach einem der voranstehenden Ansprüche,
**dadurch gekennzeichnet,**
**dass** der Kolbenzylinderdämpfer (10, 11) eine Hydrauliksteuerung (20, 30) aufweist.

7. Gelenkfahrzeug mit einem Gelenk (1) zwischen den Fahrzeugteilen nach Anspruch 6,
**dadurch gekennzeichnet,**
**dass** die Hydrauliksteuerung (20, 30) ein Proportionaldruckbegrenzungsventil (26, 26a) aufweist.

8. Gelenkfahrzeug mit einem Gelenk (1) zwischen den Fahrzeugteilen nach einem der Ansprüche 6 oder 7,
**dadurch gekennzeichnet,**
**dass** die Hydrauliksteuerung (20, 30) einen Drucksensor (27, 27a) umfasst.

9. Gelenkfahrzeug mit einem Gelenk (1) zwischen den Fahrzeugteilen nach einem der Ansprüche 6 bis 8,
**dadurch gekennzeichnet,**
**dass** die Hydrauliksteuerung (30) parallel geschaltet zum Proportionaldruckbegrenzungsventil (26, 26a) ein Druckbegrenzungsventil (35) aufweist.

10. Gelenkfahrzeug mit einem Gelenk (1) zwischen den Fahrzeugteilen nach Anspruch 9,
**dadurch gekennzeichnet,**
**dass** die Hydrauliksteuerung (30) in Reihe zu dem Druckbegrenzungsventil (35) und dem Proportionaldruckbegrenzungsventil (26, 26a) ein 3/2 Wegeventil (32) aufweist.

## Claims

1. An articulated vehicle with a joint (1) between the vehicle parts, wherein the joint (1) includes two joint segments (2, 3) that are rotatable relative to each other, wherein the joint (1) comprises a damping device (13),
**characterized in that**
the damping device (13) is configured in such a manner that in any angular position of the joint segments (2, 3) the damping torque acting on the joint (1) is substantially equal in a positive as well as in a negative direction of rotation at the moment of a reversal of the direction of rotation, wherein the damping device (13) comprises to piston cylinder dampers (10, 11), wherein respectively one of the piston cylinder dampers (10, 11) is disposed on the joint segments (2, 3) on each side of the center longitudinal axis of the joint (1) between the two joint segments (2, 3).

2. The articulated vehicle with a joint (1) between the vehicle parts according to claim 1,
**characterized in that**
the two piston cylinder dampers (10, 11) respectively have means for adjusting the effective damping force in such a manner that in any angular position of the two joint segments (2, 3) relative to each other, the damping torque caused by the two piston cylinder dampers (10, 11) is substantially the same at the moment of a reversal of the direction of rotation.

3. The articulated vehicle with a joint (1) between the vehicle parts according to claim 2,
**characterized in that**
in order to adjust the effective damping torque, the piston of each piston cylinder damper (10, 11) comprises at least one check valve (17, 17a) with a flow direction from the cylinder bottom side to the piston rod side.

4. The articulated vehicle with a joint (1) between the vehicle parts according to claim 3,
**characterized in that**
the free cross-section of the check valve (17, 17a) depends on the volume of the piston rod (14, 14a) in the cylinder and the maximum movement speed of the piston (16, 16a) in the cylinder of the piston cylinder damper (10, 11).

5. The articulated vehicle with a joint (1) between the vehicle parts according to one of the afore-mentioned claims,
**characterized in that**
as a hydraulic damper, the piston cylinder damper (10, 11) comprises a storage space (15, 15a) for the hydraulic fluid on its circumference.

6. The articulated vehicle with a joint (1) between the vehicle parts according to one of the afore-mentioned claims,
**characterized in that**
the piston cylinder damper (10, 11) comprises a hydraulics controller (20, 30).

7. The articulated vehicle with a joint (1) between the vehicle parts according to claim 6,
**characterized in that**
the hydraulics controller (20, 30) comprises a proportional pressure relief valve (26, 26a).

8. The articulated vehicle with a joint (1) between the vehicle parts according to one of the claims 6 or 7,
**characterized in that**
the hydraulics controller (20, 30) includes a pressure sensor (27, 27a).

9. The articulated vehicle with a joint (1) between the vehicle parts according to one of the claims 6 to 8,
**characterized in that**
the hydraulics controller (30) comprises a pressure relief valve (35) connected in parallel to the proportional pressure relief valve (26, 26a).

10. The articulated vehicle with a joint (1) between the vehicle parts according to claim 9,
**characterized in that**
the hydraulics controller (30) comprises a 3/2-way valve (32) connected in series to the pressure relief valve (35) and the proportional pressure relief valve (26, 26a).

## Revendications

1. Véhicule articulé comportant une articulation (1) disposée entre deux parties du véhicule, dans lequel l'articulation (1) comporte deux segments d'articulation (2, 3) tournants l'un par rapport à l'autre, dans lequel l'articulation (1) comporte une installation d'amortissement (13),
**caractérisé en ce que**,
l'installation d'amortissement (13) est agencée de telle manière que le couple d'amortissement agit de façon sensiblement égale sur l'articulation (1), pour un positionnement angulaire donné des segments d'articulation (2, 3) aussi bien dans une direction de rotation positive que dans une direction de rotation négative, dans lequel l'installation d'amortissement (13) comporte deux amortisseurs à piston-cylindre (10, 11), dans lequel respectivement un des amortisseurs à piston-cylindre (10, 11) est monté de part et d'autre de l'axe central de l'articulation (1), entre les deux segments d'articulation (2, 3) sur les segments d'articulation (2, 3).

2. Véhicule articulé comportant une articulation (1) disposée entre deux parties du véhicule, selon la revendication 1,
**caractérisé en ce que**,
les deux amortisseurs à piston-cylindre (10, 11) présentent respectivement des moyens effectifs pour ajuster la force d'amortissement tels que pour chaque position angulaire des deux segments d'articulation (2, 3) l'un par rapport à l'autre, le couple
d'amortissement actif obtenu par inversion de la direction de rotation est sensiblement égal.

3. Véhicule articulé comportant une articulation (1) disposée entre deux parties du véhicule, selon la revendication 2,
**caractérisé en ce que**,
pour l'ajustage du couple d'amortissement actif, le piston de l'un des deux amortisseurs à piston-cylindre (10, 11) comprend au moins une soupape anti-retour (17, 17a) avec direction de passage dans le sens allant du fond du cylindre vers la tige du piston.

4. Véhicule articulé comportant une articulation (1) disposée entre deux parties du véhicule, selon la revendication 3,
**caractérisé en ce que**,
la section libre de la soupape anti-retour (17, 17a) est dépendante du volume de la tige du piston (14, 14a) dans le cylindre et de la vitesse maximale du piston (16, 16a) dans le cylindre de l'amortisseur à piston-cylindre (10, 11).

5. Véhicule articulé comportant une articulation (1) disposée entre deux parties du véhicule, selon l'une des revendications précédentes,
**caractérisé en ce que**,
l'amortisseur à piston-cylindre (10, 11) comporte à sa périphérie, en tant qu'amortisseur hydraulique, un espace réservoir (15, 15a) pour le fluide hydraulique.

6. Véhicule articulé comportant une articulation (1) disposée entre deux parties du véhicule, selon l'une des revendications précédentes,
**caractérisé en ce que**,
l'amortisseur à piston-cylindre (10, 11) comporte une commande hydraulique (20, 30).

7. Véhicule articulé comportant une articulation (1) disposée entre deux parties du véhicule, selon la revendication 6,
**caractérisé en ce que**,
la commande hydraulique (20, 30) comporte une soupape (26, 26a) à limitation proportionnelle de pression.

8. Véhicule articulé comportant une articulation (1) disposée entre deux parties du véhicule, selon les revendications 6 ou 7,
**caractérisé en ce que**,
la commande hydraulique (20, 30) comporte un capteur de pression (27, 27a).

9. Véhicule articulé comportant une articulation (1) disposée entre deux parties du véhicule, selon les revendications 6 à 8,
**caractérisé en ce que**,
la commande hydraulique (30), montée en parallèle avec la soupape (26, 26a) à limitation proportionnelle de pression, comporte une soupape de limitation (35) de la pression.

10. Véhicule articulé comportant une articulation (1) disposée entre deux parties du véhicule, selon la revendication 9,
**caractérisé en ce que**,
la commande hydraulique (30), montée en série avec la soupape de limitation (35) de la pression et la soupape (26, 26a) à limitation proportionnelle de pression, comporte une soupape à 3/2 voies (32).
